# EUROPÄISCHE PATENTSCHRIFT

(11) **EP 1 442 931 B1**
(45) Veröffentlichungstag und Bekanntmachung des Hinweises auf die Patenterteilung: **19.11.2008**
(21) Anmeldenummer: 04001678.4
(22) Anmeldetag: 27.01.2004
(51) Int. Cl.: B60Q 1/32, E05B 17/10, B60J 5/04, B60Q 3/02, F21S 8/10

(54) **Beleuchtungseinrichtung an einer Fahrzeugtür**
Illumination device on a vehicle door
Dispositif d' éclairage sur une porte de véhicule

(30) Priorität: 30.01.2003 DE 10303514
(43) Veröffentlichungstag der Anmeldung: 04.08.2004
(73) Patentinhaber: Bayerische Motoren Werke Aktiengesellschaft, 80809 München (DE)
(72) Erfinder: Zeilbeck, Bernhard, 80995 München (DE); Rössler, Lothar, 85354 Freising (DE)

(56) Entgegenhaltungen:
- WO-A-00/55009
- DE-A1- 10 058 903
- DE-A1- 10 060 780
- DE-A1- 19 947 752
- US-A- 5 297 010
- PATENT ABSTRACTS OF JAPAN Bd. 018, Nr. 424 (M-1652), 9. August 1994 (1994-08-09) & JP 06 127309 A (STANLEY ELECTRIC CO LTD), 10. Mai 1994 (1994-05-10)

## Beschreibung

Die Erfindung betrifft eine Beleuchtungseinrichtung an einer Fahrzeugtür, mit den im Oberbegriff des Patentanspruches 1 angegebenen Merkmalen.

Eine derartige Beleuchtungseinrichtung weist in der WO-A-00/55 009 einen Außenspiegel auf, der an einem Stützarm befestigt ist, in dem eine Beleuchtungseinrichtung mit einer Lampe untergebracht ist. Die Lampe ist an einer aufwändigen Halterung befestigt, die ein manuelles Verstellen der Lampe vom Fahrgastraum her ermöglicht und strahlt ihr Licht über eine Lichtaustrittsöffnung an der Unterseite des Stützarmes nach unten ab.

Die Beleuchtungseinrichtung der DE-A-100 58 903 weist an der Fensterbrüstung oder an einer Rammschutzleiste jeweils einer Fahrzeugtür Leuchteinheiten auf, die ihr Licht im Wesentlichen in Richtung einer zugeordneten Fahrzeugseite abgeben. Der seitliche Nahbereich des Fahrzeugs wird nicht ausgeleuchtet. Zur Befestigung einer Leuchteinheit an der Fensterbrüstung sind Befestigungsmittel, vermutlich Schrauben verwendet, die eine Befestigung der Leuchteinheit an der Außenhaut der seitlichen Fahrzeugkarosserie, beispielsweise an dem Türaußenblech ermöglichen. Hierzu sind entsprechende Gewinde an der Fahrzeugtür vorzusehen. Zur Befestigung einer Leuchteinheit an einer Rammschutzleiste sind keine Einzelheiten angegeben.

Bei der DE-A-199 47 752 ist in der Griffhalterung eines seitlichen Türgriffes an einer Kraftfahrzeugtür eine Lampe angeordnet, die ihr Licht über ein Streu- und Reflexionsteil in eine Griffmulde im Bereich des Türgriffes einstrahlt und dadurch ein Ergreifen des Türgriffes insbesondere in der Nacht erleichtert. Das Licht der Lampe ist durch das Streu- und Reflexionsteil abgeschwächt und kann einen Bodenbereich in der Umgebung des Fahrzeugs nicht ausleuchten.

Die US-A-5 297 010 weist eine Beleuchtungseinrichtung mit einer Lampe auf, die in einem seitlichen Fußbereich eines Türgriffes einer Kraftfahrzeugtür angeordnet ist und ihr Licht in die Griffmulde des Türgriffes einstrahlt. Die Lampe kann deshalb ebenfalls keinen Bodenbereich in der Umgebung des Fahrzeugs ausleuchten.

Die JP-A-06 127 309 weist im vorderen Bereich einer Mulde in einer Fahrzeugtür, die mit einem schwenkbaren Türgriff versehen ist, ein rotes Warnlicht auf, das ihr Licht in einem engen Winkelbereich nach hinten abstrahlt. Das Warnlicht ist nicht zur Ausleuchtung eines Bodenbereiches beispielsweise seitlich neben dem Fahrzeug vorgesehen und auf Grund ihres roten Lichtes hierfür auch nicht geeignet.

In der DE-A-100 60 780 ist ein Türgriff eines Kraftfahrzeugs beschrieben, der mindestens einen Außenabschnitt aufweist, der aus einem lichtdurchlässigen oder transparenten Material besteht. Im Türgriff ist eine Lampe angeordnet, durch die das lichtdurchlässige Material beleuchtbar ist. Die Lampe soll als Fahrtrichtungsanzeige und/oder Warnblinkleuchte und/oder Vorfeldbeleuchtung und/oder Griffschalenbeleuchtung und/oder Anzeige beim Verriegeln und/oder Entriegeln des Fahrzeugs und/oder Diebstahlwarnanlage verwendbar sein. Der beleuchtete Außenabschnitt des Türgriffes dürfte nachts insbesondere auf die Fahrer anderer Fahrzeuge störend wirken, die durch den beleuchteten Türgriff eventuell vom Fahrzeugverkehr abgelenkt werden.

Die DE 198 09 716 A1 weist an der Innenseite einer Fahrzeugtür eine Lichtquelle auf, die ihr Licht über einen Lichtleiter zu einem lichtreflektierenden Teil eines Außentürgriffes an einer Fahrzeugtür leitet und dort über wenigstens eine Lichtaustrittsfläche an eine vertikale und/oder horizontale Ebene abstrahlt. Die von der Lichtquelle abgegebenen Lichtstrahlen werden durch den Lichtleiter, und das Licht reflektierende Teil teilweise absorbiert, wodurch die Lichtabgabe entsprechend vermindert ist. Das lichtreflektierende Teil erfordert eine genaue Bearbeitung von mehreren Pass- und Koppelflächen, die kostenintensiv herzustellen sind. Bei Nacharbeiten, beispielsweise beim Nachlackieren der Fahrzeugtür, dürfte eine Trennung des Lichtleiters von dem lichtreflektierenden Teil erforderlich sein. Um eine Verschmutzung der Licht übertragenden Bereiche zu verhindern, sind Schutzmaßnahmen erforderlich. Bei einer erneuten Montage ist der Lichtleiter mühsam in die am lichtreflektie-renden Teil vorgesehene Öffnung einzubringen.

Der Erfindung liegt die Aufgabe zu Grunde, eine Beleuchtungseinrichtung mit den Merkmalen im Oberbegriff des Patentanspruches 1 anzugeben, die einfach montierbar und bei Nacharbeiten an der Fahrzeugtür von dem Arbeitsbereich zu entfernen ist. Darüber hinaus soll die Beleuchtungseinrichtung kostengünstig zu fertigen und einfach zu montieren sein.

Diese Aufgabe ist durch die im Patentanspruch 1 angegebenen Merkmale gelöst. Vorteilhafte Ausgestaltungen der Erfindung sind den Unteransprüchen entnehmbar.

Die Befestigung der Lichtquelle an dem Stützelement ermöglicht eine ungehinderte Lichtabgabe in einen gewünschten Bereich. Das Stützelement ist hierzu lediglich in einer entsprechenden Lage anzubringen. Nachdem der elektrische Leiter durch eine Durchtrittsöffnung in der Fahrzeugtür hindurch geführt ist, kann das Stützelement beispielsweise weitgehend unauffällig in oder an der Durchtrittsöffnung angeordnet werden. Dies kann beispielsweise dadurch erfolgen, dass das Stützelement in eine radiale Nut der Durchtrittsöffnung einzubringen und dort ausreichend durch Klemmwirkung oder Halteelemente zu fixieren ist. Die Durchtrittsöffnung kann eine ohnehin vorhandene, beispielsweise im Bereich eines Außentürgriffes vorgesehene Öffnung zur Aufnahme eines Schließzylinders oder eines Steges des Außentürgriffes sein. Ist an der Fahrzeugtür eine Nacharbeit erforderlich, beispielsweise nach einem Unfall ein Nachlackieren der Außenseite der Fahrzeugtür, so kann nach dem Entfernen eines eventuell in der Durchtrittsöffnung angeordneten Gegenstandes, beispielsweise eines Schließzylinders, und eventuell eines weiteren Gegenstandes, beispielsweise des Außentürgriffes, das Stützelement durch die Durchtrittsöffnung hindurch in einen geschützten Innenbereich der Fahrzeugtür gebracht werden, in der eine Beschädigung oder Verschmutzung der Beleuchtungseinrichtung und ein Kurzschluss durch Feuchtigkeit verhindert ist.

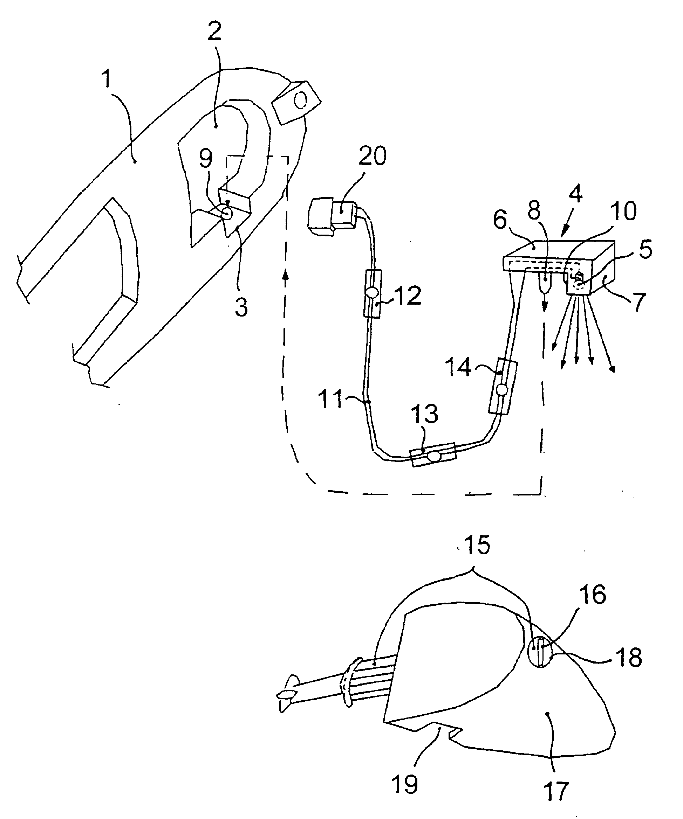

Ein Ausführungsbeispiel der Erfindung wird anhand einer Zeichnung mit einer einzigen Figur näher erläutert, die in einer Explosionsansicht die wesentlichen Teile der Beleuchtungseinrichtung vereinfacht darstellt.

Die in der einzigen Figur dargestellte Beleuchtungseinrichtung ist im Bereich eines Türaußengriffes an der Außenseite einer Kraftfahrzeugtür vorgesehen. Der nicht dargestellte Türaußengriff ist durch wenigstens eine Öffnung in der Fahrzeugtür hindurch mit einem Türgriffträger 1 verstellbar zu verbinden, der an der Innenseite der Außenwand der Fahrzeugtür zu befestigen ist. Der Türgriffträger 1 weist eine mit einer Durchgangsöffnung in der Außenwand der Fahrzeugtür zumindest teilweise fluchtende Aufnahme- oder Durchtrittsöffnung 2 auf, in der im unteren Bereich eine radiale Nut 3 ausgebildet ist.

In einem L-förmigen Stützelement 4 beispielsweise aus Kunststoff ist eine Lampe oder Leuchtdiode 5 angeordnet, die ihr Licht über eine Lichtaustrittsöffnung in dem von dem äußeren, etwa horizontalen Basisbereich 6 des Stützelements 4 nach unten gerichteten Schenkelbereich 7 abstrahlen kann. Das Stützelement 4 ist mit seinem Basisbereich 6 in die Nut 3 einzubringen, die mit Spiel an die Breite des Basisbereiches 6 angepasst ist. Zur Vorfixierung des Stützelements 4 in der Nut 3 steht von dem mittleren Bereich der Unterseite des Basisbereiches 6 ein Bolzen 8 ab, der in der Einbaulage des Stützelements 4 in eine an den Bolzen 8 mit Spiel angepasste Fixieröffnung 9 im Boden der Nut 3 einsteckbar ist. In der Einbaulage des Stützelements 4 liegt die Innenseite 10 des Schenkelbereiches 7 an der Außenseite der Fahrzeugtür oder an dem Türgriffträger an.

Mit dem Stützelement 4 ist wasserdicht eine elektrische Leitung 11 verbunden, die in dem Stützelement 4 zu der Lampe bzw. Leuchtdiode 5 geführt ist. Das freie Ende der elektrischen Leitung 11 ist mit einem Elektrostecker 20 verbunden, der zusammen mit der elektrischen Leitung 11, dem Stützelement 4, der Lampe bzw. Leuchtdiode 5 sowie einigen zur Befestigung der elektrischen Leitung 11 im Innenbereich der Fahrzeugtür vorgesehene Befestigungselemente 12, 13, 14 eine Vormontageeinheit bildet, die separat zu fertigen ist.

Vor oder bei der Befestigung des Stützelements 4 in der Nut 3 ist die elektrische Leitung 11 durch die Aufnahme- oder Durchtrittsöffnung 2 hindurch vorzugsweise in einem wassergeschützen Innenbereich der Fahrzeugtür mit einer Stromleitung beispielsweise eines Kabelstranges zu verbinden und die Leitung 11 über die Befestigungselemente 12, 13, 14 an einem inneren Wandbereich oder an einem daran abgestützten Teil zu befestigen, wodurch verhindert werden soll, dass die Leitung 11 im Fahrbetrieb an Wandbereichen anschlägt und dabei Geräusche verursacht.

In die Aufnahme- oder Durchtrittsöffnung 2 kann ein Schließzylinder 15 einer Schließeinrichtung axial eingesteckt und fixiert werden. Der mit einer Schlüsseleintrittsöffnung 16 für einen nicht dargestellten Schlüssel versehene Schließzylinder 15 ist mit einer äußeren Abdeckung 17 fest oder lösbar verbunden, die eine Schlüsseldurchtrittsöffnung 18 aufweist, die etwa mit der Schlüsseleintrittsöffnung 16 im Schließzylinder 15 fluchtet. Unterhalb des Schließzylinders 15 ist im unteren Bereich der Abdeckung 17 eine Lichtaustrittsöffnung 19 ausgebildet, durch die nach der Montage der Beleuchtungseinrichtung die Lampe oder Leuchtdiode 5 ihr Licht nach unten und/oder seitlich abgeben kann, wodurch ein gewünschter Bereich ausgeleuchtet wird. Nach der Montage der Abdeckung 17 ist das Stützelement 4 an seiner Oberseite und an seinen in Fahrzeuglängsrichtung gegenüberliegenden Seiten einerseits durch die Seitenwände der Lichtaustrittsöffnung 19 und andererseits durch eine Wand der Abdeckung 17 gestützt und dadurch in der Einbaulage fixiert. Beispielsweise durch Einstecken eines Schlüssels in die Schlüsseleintrittsöffnung 16 des Schließzylinders 15 oder durch Betätigung einer Fernsteuerungseinrichtung kann die Lampe oder Leuchtdiode 5 eingeschaltet werden, die dann einen äußeren Seitenbereich der Fahrzeugtür und/oder einen äußeren Bodenbereich in der Nähe der Fahrzeugtür ausleuchtet.

Ist beispielsweise nach einem Unfall die Fahrzeugtür an der Außenseite im Bereich des Türaußengriffes nachzuarbeiten, beispielsweise zu lackieren, so ist lediglich der Türaußengriff sowie der Schließzylinder mit seiner Abdeckung von der Fahrzeugtür zu entfernen und das Stützelement 4 durch die Aufnahme- oder Durchtrittsöffnung 2 hindurch in das Innere der Fahrzeugtür in eine Lage zu verstellen, damit eventuell nach dem Abdecken von Öffnungen in der Fahrzeugtür die Nacharbeiten mühelos ausgeführt werden können.

Vorzugsweise ist das Stützelement in einer Aufnahme- oder Durchtrittsöffnung zu befestigen, die ohnehin vorhanden und zur Aufnahme eines Bauteiles vorgesehen ist. Ebenso kann das Stützelement auch in einer anderen Aufnahme- oder Durchtrittsöffnung angeordnet sein, die beispielsweise keine radiale Nut aufweist. Eine Befestigung des Stützelements in der Aufnahme- oder Durchtrittsöffnung kann durch Klemmwirkung und/oder über beliebige Befestigungsmittel erfolgen. Die Beleuchtungseinrichtung erfordert lediglich eine kurze elektrische Leitung, die eventuell nicht über Befestigungselemente an der Fahrzeugtür abzustützen ist. Die Beleuchtungseinrichtung kann an einer beliebigen inneren oder äußeren Fläche der Fahrzeugtür angeordnet sein. Mit der Beleuchtungseinrichtung können mit einem geringen Aufwand zahlreiche Varianten gebildet werden, die sich beispielsweise lediglich bezüglich der Lichtquelle und/oder dem Stützelement und/oder dem Material oder die Farbe der Abdeckung unterscheiden.

## Patentansprüche

1. Beleuchtungseinrichtung an einer Fahrzeugtür, die ein an der Fahrzeugtür zu befestigendes Stützelement (4) aufweist, an dem eine Lichtquelle (5) befestigt ist, die mit einer elektrischen Leitung (11) verbunden ist, die zu dem Stützelement (4) führt und die elektrische Leitung (11) mit ihrem freien Ende durch eine Durchgangsöffnung (2) in der Fahrzeugtür hindurch in einen Innenbereich der Fahrzeugtür einzubringen und mit einer Stromleitung zu verbinden ist, **dadurch gekennzeichnet, dass** das Stützelement (4) einen etwa horizontalen Basisbereich (6) aufweist, der in eine radiale, an die Breite des Basisbereiches (6) angepasste Nut (3) in einer Aufnahme- oder Durchtrittsöffnung (2) an der Fahrzeugtür einzubringen und lösbar zu befestigen ist, und die Lichtquelle (5) ihr Licht über eine Lichtaustrittsöffnung in einem von dem äußeren, etwa horizontalen Basisbereich (6) des Stützelements (4) nach unten gerichteten Schenkelbereich (7) abstrahlen kann und in der Einbaulage des Stützelements (4) die Innenseite 10 des Schenkelbereiches (7) an der Außenseite der Fahrzeugtür oder an einem Türgriffträger anliegt.

2. Beleuchtungseinrichtung nach Anspruch 1, **dadurch gekennzeichnet, dass** das freie Ende der elektrischen Leitung (11) mit einem Elektrostecker (20) verbunden ist, der zusammen mit der elektrischen Leitung (11), dem Stützelement (4) und der Lichtquelle (5) eine Vormontageeinheit bildet.

3. Beleuchtungseinrichtung nach Anspruch 1 oder 2, **dadurch gekennzeichnet, dass** die Aufnahme- oder Durchtrittsöffnung (2) in einem Türgriffträger (1) ausgebildet ist und mit einer Durchgangsöffnung in der Außenwand der Fahrzeugtür zumindest teilweise fluchtet.

4. Beleuchtungseinrichtung nach Anspruch3, **dadurch gekennzeichnet, dass** von dem Stützelement (4) ein Bolzen (8) absteht, der in eine darum angepasste Fixieröffnung (9) im Boden der Nut (3) einsteckbar ist.

5. Beleuchtungseinrichtung nach einem der Ansprüche 1 bis 4, **dadurch gekennzeichnet, dass** in die Aufnahme- oder Durchtrittsöffnung (2) ein Schließzylinder (15) einer Schließeinrichtung einsteckbar ist.

6. Beleuchtungseinrichtung nach Anspruch 5, **dadurch gekennzeichnet, dass** der Schließzylinder (15) mit einer äußeren Abdeckung (17) verbunden ist, die eine Schlüsseleintrittsöffnung (18) für einen Schlüssel und eine Lichtaustrittsöffnung (19) für die Lichtquelle (5) aufweist.

7. Beleuchtungseinrichtung nach Anspruch 6 **dadurch gekennzeichnet, dass** die Lichtaustrittsöffnung (19) an der Unterseite der Abdeckung (17) ausgebildet ist.

8. Beleuchtungseinrichtung nach einem der Ansprüche 1 bis 7, **dadurch gekennzeichnet, dass** der Elektrostecker (20) in einem wassergeschützen Bereich mit der Stromleitung verbunden ist und/oder die elektrische Leitung (11) über wenigstens ein Befestigungselement (12, 13, 14) an einer Wand der Kraftfahrzeugtür lösbar zu befestigen ist.

## Claims

1. A lighting installation on the door of a vehicle, comprising a support element (4) for fastening to the door and fastened to a light source (5) connected to an electric line (11) which leads to the support element (4), and the free end of the electric line (11) is insertable through a passage opening (2) in the door into an inner region of the door and is connectable to a power line, **characterised in that** the support element (4) has an approximately horizontal base region (6) which can be inserted and releasably fastened in a radial groove (3) adapted to the width of the base region (6) in a receiving or passage opening (2) in the vehicle door, and the light source (5) radiates light through an exit opening in a side region (7) extending downwards from the outer, approximately horizontal base region (6) of the support element (4), and when the support element (4) is in the installed position the inside (10) of the side region (7) abuts the outside of the vehicle door or against a door-handle holder.

2. A lighting installation according to claim 1,
**characterised in that** the free end of the electric line (11) is connected to an electric plug (20) which forms a pre-assembled unit together with the electric line (11), the support element (4) and the light source (5).

3. A lighting installation according to claim 1 or claim 2,
**characterised in that** the receiving or passage opening (2) is formed in a door-handle holder (1) and is at least partly in line with a passage opening in the outer wall of the vehicle door.

4. A lighting installation according to claim 3,
**characterised in that** a pin or bolt (8) projects from the support element (4) and is insertable into a matching fixing opening (9) in the base of the groove (3).

5. A lighting installation according to any of claims 1 to 4,
**characterised in that** a closing cylinder (15) of a closing device is insertable into the receiving or passage opening (2).

6. A lighting installation according to claim 5,
**characterised in that** the closing cylinder (15) is connected to an outer cover (17) which comprises an opening (18) for inserting a key and a light exit opening (19) for the light source (5).

7. A lighting installation according to claim 6,
**characterised in that** the light exit opening (19) is formed on the underside of the cover (17).

8. A lighting installation according to any of claims 1 to 7,
**characterised in that** the plug (20) is connected to the power line in a region protected from water and/or the electric line (11) can be releasably fastened to a wall of the vehicle door via at least one fastening element (12, 13, 14).

## Revendications

1. Installation d'éclairage pour une portière de véhicule comportant un élément de support (4) qui se fixe à la portière et auquel est fixée une source lumineuse (5) reliée à un câble électrique (11) aboutissant à l'élément de support (4) et dont l'extrémité libre passant à travers un orifice traversant (2) dans la portière pour arriver dans l'intérieur de la portière et est reliée à une ligne électrique,
**caractérisée en ce que**
l'élément de support (4) comporte une zone de base (6) sensiblement horizontale, destinée à être placée dans une rainure (3), radiale, adaptée à la largeur de la zone de base (6) dans un orifice de réception de passage (2) de la portière pour être fixée de manière amovible et la source lumineuse (5) dirige la lumière par un orifice de sortie de lumière dans une zone en forme de branche (7) dirigée vers le bas dans la partie extérieure de la zone de base sensiblement horizontale (6) de l'élément de support (4) et en position de montage de l'élément de support (4), le côté intérieur (10) de la zone en forme de branche (7) est appliqué contre le côté extérieur de la portière du véhicule ou contre un support de poignée de portière.

2. Installation d'éclairage selon la revendication 1,
**caractérisée en ce que**
l'extrémité libre du câble électrique (11) est reliée à un connecteur (20) qui constitue un ensemble pré-assemblé comprenant le câble électrique (11), l'élément de support (4) et la source lumineuse (5).

3. Installation d'éclairage selon la revendication 1 ou 2,
**caractérisée en ce que**
l'orifice de passage ou de réception (2) est réalisé dans un support de poignée (1) et il est au moins en partie aligné sur un orifice de passage réalisé dans la paroi extérieure de la portière du véhicule.

4. Installation d'éclairage selon la revendication 4,
**caractérisée en ce qu'**
un goujon (8) est en saillie de l'élément de support (4) et ce goujon peut être engagé dans un orifice de fixation (9), adapté, réalisé dans le fond de la rainure (3).

5. Installation d'éclairage selon l'une des revendications 1 à 4,
**caractérisée par**
un cylindre de fermeture (15) d'une installation de fermeture s'engage dans l'orifice de réception ou de passage (2).

6. Installation d'éclairage selon la revendication 5,
**caractérisée en ce que**
le cylindre de fermeture (15) est relié à un cache extérieur (17) comportant un orifice d'entrée de clé (18) pour recevoir une clé et un orifice de sortie de lumière (19) pour la source lumineuse (5).

7. Installation d'éclairage selon la revendication 6,
**caractérisée en ce que**
l'orifice de sortie de lumière (19) est réalisé sur le côté inférieur du cache (17).

8. Installation d'éclairage selon l'une des revendications 1 à 7,
**caractérisée en ce que**
le connecteur (20) est relié au câble électrique dans une zone protégée contre l'arrivée de l'eau et/ou le câble électrique (11) est fixé de manière amovible par l'intermédiaire d'au moins un élément de fixation (12, 13, 14) à la paroi de la portière.
